# EUROPÄISCHE PATENTSCHRIFT

(11) **EP 3 633 244 B1**
(45) Veröffentlichungstag und Bekanntmachung des Hinweises auf die Patenterteilung: **28.08.2024**
(21) Anmeldenummer: 19200168.3
(22) Anmeldetag: 27.09.2019
(51) Int. Cl.: F16J 15/3228, F16J 15/3284

(54) **DICHTELEMENT**
SEALING ELEMENT
ÉLÉMENT D'ÉTANCHÉITÉ

(30) Priorität: 01.10.2018 DE 102018124256
(43) Veröffentlichungstag der Anmeldung: 08.04.2020
(73) Patentinhaber: Carl Freudenberg KG, 69469 Weinheim (DE)
(72) Erfinder: Hintenlang, Guenter, 69518 Absteinach (DE); Heldmann, Martin, 64678 Lindenfels (DE); Hofmann, Jens, 68305 Mannheim (DE); Colineau, François, 79227 Schallstadt-Leutersberg (DE); Guder, Frank, 67227 Frankenthal (DE)
(74) Vertreter: Reiser & Partner Patentanwälte mbB

(56) Entgegenhaltungen:
- EP-A1- 3 631 254
- DE-A1- 102014 010 269
- DE-A1- 102016 010 926
- JP-U- S60 175 957
- US-A- 4 844 485
- US-A1- 2015 226 332

## Beschreibung

Die Erfindung betrifft ein Dichtelement zur Herstellung einer elektrisch leitfähigen Verbindung zwischen einem ersten Maschinenelement und einem zweiten Maschinenelement, umfassend zumindest eine Dichtscheibe und einen Tragring, wobei die Dichtscheibe aus einem elektrisch leitfähigen Vliesstoff ausgebildet ist.

Aus der DE 10 2013 000 982 A1 ist eine Dichtung bekannt, umfassend einen Dichtring mit zumindest einer dynamisch beanspruchten Dichtlippe und einer Vorschaltdichtung. Die Vorschaltdichtung ist mit axialem Abstand benachbart zur Dichtlippe angeordnet und besteht aus einem elektrisch leitfähigen Werkstoff. Die Dichtlippe und die Vorschaltdichtung umschließen dichtend eine abzuschließende Oberfläche eines ersten Maschinenelementes. Dabei ist das erste Maschinenelement mit radialem Abstand benachbart zu einem zweiten Maschinenelement angeordnet. In dem durch den radialen Abstand gebildeten Spalt sind der Dichtring und die Vorschaltdichtung angeordnet. Das erste Maschinenelement und das zweite Maschinenelement sind durch die Vorschaltdichtung elektrisch leitend miteinander verbunden. Dazu berührt die Vorschaltdichtung sowohl das erste Maschinenelement als auch das zweite Maschinenelement anliegend. Die Vorschaltdichtung ist als Potenzialausgleichsring ausgebildet und besteht aus einem elektrisch leitfähigen, mit PTFE imprägnierten Vliesstoff.

Die Vorschaltdichtung bewirkt einen Potentialausgleich zwischen den beiden Maschinenelementen und verhindert mechanische Beschädigungen, die entstehen können, wenn unterschiedlich große elektrische Potentiale der Maschinenelemente durch einen elektrischen Spannungsdurchschlag ausgeglichen werden. Ein Spannungsdurchschlag kann einen Materialabtrag an dem Maschinenelement mit relativ geringer Ladung bewirken und eine Veränderung des Materialgefüges in dem Bereich, in dem der Spannungsdurchschlag erfolgt.

Aus der DE 10 2014 010 269 A1 ist eine weitere Vorschaltdichtung bekannt. Die Vorschaltdichtung umfasst eine kreisringförmig ausgebildete Scheibe aus einem elektrisch leitfähigen und luftdurchlässigen Werkstoff und einen Tragkörper, wobei die Scheibe separat ausgebildet und mit dem Tragkörper verbunden ist. Dabei ist der Tragkörper durch einen Dichtring gebildet.

Bei den vorbekannten Dichtungen ist das elektrisch leitfähig ausgebildete Dichtelement entlang der Stirnseite des Radialflansches des Dichtringes stoffschlüssig festgelegt.

US 2015/0226332 A1 und US 4,844,485 zeigen jeweils ein Dichtelement mit einer Dichtscheibe und einem Tragring. Das Dichtelement weist dabei eine Dichtscheibe aus PTFE auf.

DE 10 2016 010 926 A1 offenbart ein Dichtelement, umfassend eine Dichtscheibe und einen Tragring. Die Dichtscheibe ist aus einem elektrisch leitfähigen Material ausgebildet.

Aus der JP S60 175957 U ist ein Dichtelement bekannt. Das Dichtelement umfasst einen Tragring mit Radialwellendichtring und einen elektrisch leitenden Ring mit einer Vielzahl über den Umfang verteilten Leitstreifen.

Der Erfindung liegt die Aufgabe zugrunde, ein Dichtelement der eingangs genannten Art bereitzustellen, welches einfach und kostengünstig herstellbar ist.

Diese Aufgabe wird mit den Merkmalen von Anspruch 1 gelöst. Auf vorteilhafte Ausgestaltungen nehmen die Unteransprüche Bezug.

Zur Lösung der Aufgabe umfasst das Dichtelement zumindest eine Dichtscheibe und einen Tragring, wobei der Tragring einen Axialflansch und einen Radialflansch aufweist, der Tragring einen Innenring und einen Außenring umfasst, wobei die Dichtscheibe zwischen dem Innenring und dem Außenring festgelegt ist, wobei die Dichtscheibe aus einem elektrisch leitfähigen Vliesstoff ausgebildet ist und wobei die Dichtscheibe zumindest abschnittsweise entlang des Axialflansches mittels einer Klemmverbindung zwischen dem Innenring und dem Außenring festgelegt ist.

Eine Klemmverbindung von Dichtscheibe und Tragring ist besonders einfach herstellbar. Insbesondere können Vorbehandlungsschritte von Tragring und/oder Dichtscheibe entfallen, welche zumeist für eine stoffschlüssige Anbindung der Dichtscheibe an den Tragring erforderlich sind. Die Dichtscheibe ist aus elektrisch leitfähigem Material ausgebildet und wird so relativ zu dem Tragring positioniert, dass sich eine Klemmvorrichtung ergibt, welche die Dichtscheibe ortsfest fixiert.

Die Dichtscheibe erstreckt sich dabei erfindungsgemäß zumindest abschnittsweise entlang des Axialflansches des Tragringes. Bei dieser Ausgestaltung erfolgt eine Anpressung der Dichtscheibe nicht nur in axialer Richtung sondern auch in radialer Richtung. Gemäß einer nicht erfindungsgemäßen Ausgestaltung des Tragrings kann die Dichtscheibe dabei direkt an die Innenwand des zweiten Maschinenelementes angepresst werden. Hierbei ist vorteilhaft, dass ein direkter Kontakt der Dichtscheibe an das zweite Maschinenelement gegeben ist, wobei sich eine verhältnismäßig große Anlagefläche für die elektrische Kontaktierung ergibt.

Die Dichtscheibe kann in dem Abschnitt, in welchem die Dichtscheibe zwischen dem Tragring und dem zweiten Maschinenelement festgelegt ist, zwischen 5% und 50% der Ausgangsdicke komprimiert sein. Bevorzugt beträgt die Kompression zwischen 10% und 30% der Ausgangsdicke. Unter Ausgangsdicke ist dabei die Dicke der Dichtscheibe im unmontierten Zustand zu verstehen. Aufgrund der Klemmverbindung wird die Dichtscheibe komprimiert, so dass sich die Dicke der Dichtscheibe verringert. Insofern beträgt die Dicke der Dichtscheibe in dem eingeklemmten Abschnitt zwischen 70% und 90% der Ausgangsdicke. Durch diese Kompression ergibt sich eine sichere Klemmverbindung, welche ein Lösen der Dichtscheibe aus dem Dichtelement verhindert. Des Weiteren gelangt die Oberfläche der Dichtscheibe intensiv in Kontakt mit der Wandung des Tragrings und des zweiten Maschinenelementes, wodurch sich eine verbesserte elektrische Leitfähigkeit zwischen der Dichtscheibe und dem zweiten Maschinenelement ergibt.

Um lokal die Klemmkraft zu erhöhen, kann der Tragring mit einer Anpresskontur versehen sein. Die Anpresskontur kann beispielsweise in Form einer umlaufenden Sicke ausgebildet sein, welche außenumfangsseitig aus dem Axialflansch hervorsteht. Alternativ ist auch denkbar, dass entlang des Axialflansches ein umlaufender Vorsprung vorgesehen ist.

In dem Bereich, in welchem eine Verklemmung der Dichtscheibe erfolgt, kann auch ein Anpresselement vorgesehen sein. Das Anpresselement kann aus einem O-Ring ausgebildet sein. Das Anpresselement kann zwischen Dichtscheibe und Tragring oder zwischen Dichtscheibe und zweitem Maschinenelement angeordnet sein. Im Bereich des Anpresselementes wird die Dichtscheibe stärker komprimiert, was mit einer verbesserten Klemmwirkung einhergeht.

Die Dichtscheibe kann zwischen Tragring und zweitem Maschinenelement festgelegt sein. Bei dieser Ausgestaltung weist das zweite Maschinenelement vorzugsweise einen Absatz mit einer Radialschulter auf. Der Tragring ist vorzugsweise L-förmig ausgebildet und umfasst einen Radialflansch und einen Axialflansch. Der Axialflansch ist außenumfangsseitig an dem Radialflansch angeordnet. Bei dieser Ausgestaltung bildet sich eine Klemmverbindung zwischen der Radialschulter des zweiten Maschinenelementes und dem Tragring. Die Dichtscheibe ist zwischen Tragring und zweitem Maschinenelement eingeklemmt.

Vorzugsweise erstreckt sich die Dichtscheibe entlang des Radialflansches und zumindest abschnittsweise entlang des Axialflansches des Tragringes. In diesem Fall verbindet die Dichtscheibe das erste Maschinenelement und das zweite Maschinenelement. In diesem Fall ist es nicht erforderlich, dass der Tragring elektrisch leitfähig ausgerüstet ist. Die Dichtscheibe liegt mit radialer Vorspannung an dem ersten Maschinenelement an, wobei sich die Dichtscheibe nach Montage abschnittsweise in Axialrichtung vorwölbt. Dadurch ist eine elektrisch leitfähige Verbindung von Dichtscheibe und erstem Maschinenelement gegeben.

Die elektrisch leitfähige Verbindung von Dichtscheibe und zweitem Maschinenelement ergibt sich bei dieser Ausgestaltung dadurch, dass die Dichtscheibe durch die Klemmverbindung direkt an das zweite Maschinenelement, bzw. an die Radialschulter des zweiten Maschinenelementes angepresst ist.

Der Axialflansch des Tragringes kann einen Absatz aufweisen, so dass der dem Radialflansch zugeordnete Abschnitt des Axialflansches einen geringeren Durchmesser aufweist als der dem freien Ende zugeordnete Abschnitt. Durch die Querschnittsreduzierung ergibt sich ein Aufnahmeraum für die Dichtscheibe. Durch den Aufnahmeraum wird eine übermäßige Kompression der Dichtscheibe verhindert. Durch den Absatz erfolgt eine Verpressung der Dichtscheibe, so dass die Dicke der Dichtscheibe in dem Bereich des Absatzes gegenüber der Ausgangsdicke der Dichtscheibe zwischen 10% und 30% reduziert ist. Gleichzeitig liegt das freie Ende des Axialflansches direkt an dem zweiten Maschinenelement an, so dass eine direkte Kraftübertragung zwischen Tragring und zweitem Maschinenelement möglich ist und die Dichtscheibe im Kraftnebenschluss angeordnet ist.

Der Tragring umfasst erfindungsgemäß einen Innenring und einen Außenring, wobei die Dichtscheibe zwischen Innenring und Außenring festgelegt ist. Bei dieser Ausgestaltung ergibt sich die Klemmverbindung zwischen Innenring und Außenring. Der Vorteil ist, dass das Dichtelement samt Dichtscheibe als vormontierte Einheit ausgebildet sein kann. Bei dieser Ausgestaltung ist zumindest der Außenring elektrisch leitfähig ausgebildet. Bei dieser Ausgestaltung erfolgt eine Kompression der Dichtscheibe zwischen dem Innenring und dem Außenring. Vorzugsweise sind die Dichtscheibe, der Innenring und der Außenring so ausgestaltet, dass die Dichtscheibe in dem eingeklemmten Bereich zwischen 10% bis 30% der Ausgangsdicke der Dichtscheiben komprimiert ist.

Der Innenring und der Außenring weisen jeweils einen Radialflansch und einen Axialflansch auf, wobei der Außendurchmesser des Axialflansches des Innenrings im Wesentlichen dem Innendurchmesser des Axialflansches des Außenrings entspricht. Die Dichtscheibe erstreckt sich ausgehend von dem Tragring radial nach innen und liegt mit elastischer Vorspannung dichtend außenumfangsseitig auf dem ersten Maschinenelement an. Dabei ist die Dichtscheibe in eine Axialrichtung vorgewölbt, welche der Erstreckung des Axialflansches des Tragrings entgegengesetzt ist.

Das freie Ende des Axialflansches des Außenrings kann radial nach innen abgebogen sein und dabei zumindest teilweise den Axialflansch des Innenrings überdecken. Dadurch kann verhindert werden, dass sich der Innenring vom Außenring löst.

Der Innenring kann an dem dem Radialflansch zugeordneten Abschnitt des Axialflansches eine Querschnittsverjüngung aufweisen. Durch die Querschnittsverjüngung ergibt sich ein Aufnahmeraum in welchem sich die Dichtscheibe erstrecken kann. Bei dieser Ausgestaltung kann sich die Dichtscheibe entlang des Radialflansches von Innenring und Außenring und abschnittsweise auch entlang des Axialflansches von Innenring und Außenring erstrecken.

Der Tragring kann einen zumindest einen Zwischenring umfassen, wobei eine erste Dichtscheibe zwischen Innenring und Zwischenring und zumindest eine zweite Dichtscheibe zwischen Zwischenring und Außenring festgelegt ist. Je nach Ausgestaltung können dabei mehrere Zwischenringe vorgesehen sein, wobei jeweils zwischen dem Innenring, den einzelnen Zwischenringen und dem Außenring eine Dichtscheibe angeordnet ist. Dabei können Dichtscheiben vorgesehen sein, die aus voneinander abweichenden Werkstoffen bestehen.

Die zwischen Innenring, Zwischenring und Außenring festgelegten Dichtscheiben liegen mit radialer Vorspannung auf dem ersten Maschinenelement an und sind in einer Axialrichtung vorgewölbt. Zumindest eine der beiden Dichtscheiben ist elektrisch leitfähig ausgerüstet. Ebenso ist der Außenring elektrisch leitfähig. Darüber hinaus können auch der Innenring und/oder der Zwischenring elektrisch leitfähig sein.

In einer vorteilhaften Ausgestaltung kann eine Dichtscheibe elektrisch leitfähig ausgebildet sein, die zweite Dichtscheibe weist eine weichmagnetische Ausrüstung auf und fungiert als elektromagnetische Abschirmung zur Abschirmung elektromagnetischer Störwellen. Alternativ ist es auch denkbar, dass der Innenring oder der Zwischenring eine derartige weichmagnetische Ausrüstung aufweisen. Insofern ermöglicht die Ausgestaltung des Dichtelementes mit zwei Dichtscheiben sowohl die Herstellung einer elektrisch leitfähigen Verbindung zwischen erstem Maschinenelement und zweitem Maschinenelement und - bei entsprechender Ausrüstung - auch eine Abschirmung gegenüber elektromagnetischen Störwellen. Dadurch, dass mehrere Dichtscheiben vorgesehen sind, verbessert sich darüber hinaus die Dichtwirkung.

Auch bei dieser Ausgestaltung ist es denkbar, dass der Axialflansch des Außenringes an dessen freien Ende nach innen umgebördelt ist und so den Axialflansch des Innenringes überdeckt, so dass die Dichtscheiben und der Zwischenring zwischen Innenring und Außenring eingeklemmt sind, wobei der Innenring formschlüssig an dem Außenring verriegelt ist.

An dem Innenring kann ein Radialwellendichtring angeordnet sein. Dieser ist vorzugsweise an dem radial inneren freien Ende des Radialflansches des Innenrings festgelegt.

Gemäß einer nicht erfindungsgemäßen Ausgestaltung kann an dem Innenring eine Elastomerspur angeordnet sein. Dabei kann aus der Elastomerspur ein Radialwellendichtring ausgeformt sein. Des Weiteren kann die Elastomerspur die dem Außenring zugeordnete Stirnseite des Radialflansches und die dem zweiten Maschinenelement zugeordnete Fläche des Axialflansches bedecken. Im Bereich des Axialflansches bildet die Elastomerspur eine statische Dichtung. Zwischen Innenring und Außenring bewirkt die Elastomerspur ein Einklemmen der Dichtscheibe. Dabei kann aus der Elastomerspur eine Aufnahme ausgeformt sein, in welcher die Dichtscheibe angeordnet werden kann. Dadurch wird eine übermäßige Kompression der Dichtscheibe verhindert.

Die Dichtscheibe kann elektrisch leitfähige Partikel aufweisen. Die elektrisch leitfähigen Partikel bewirken die elektrische Leitfähigkeit der Dichtscheibe. Bevorzugt sind die elektrisch leitfähigen Partikel als Fasern ausgebildet, wobei besonders bevorzugt elektrisch leitfähige Fasern mit einer Länge von mindestens 10 mm zum Einsatz gelangen. Derartige verhältnismäßig lange Fasern können eine direkte Übertragung des elektrischen Stromes ermöglichen, so dass die Dichtscheibe einen verhältnismäßig geringen elektrischen Widerstand aufweist. Darüber hinaus ist vorteilhaft, dass die Fasern in direkten Kontakt mit dem ersten Maschinenelement und dem zweiten Maschinenelement gelangen können.

Die aus Vliesstoff gebildete Dichtscheibe ist vorzugsweise mit der PTFE-Dispersion getränkt. Dadurch stabilisiert sich der Vliesstoff und es reduziert sich der Reibwert gegenüber dem ersten Maschinenelement. Dadurch verlängert sich die Gebrauchsdauer des Dichtelementes.

Einige Ausgestaltungen des erfindungsgemäßen Dichtelementes werden nachfolgend anhand der Figuren näher erläutert. Diese zeigen, jeweils schematisch:
- Fig. 1: im Schnitt ein Dichtelement, dessen Tragring einen Innenring und einen Außenring aufweist;
- Fig. 2: ein Dichtelement gemäß Fig. 1 mit formschlüssiger Verbindung von Innenring und Außenring;
- Fig. 3: ein Dichtelement mit Zwischenring und zwei Dichtscheiben;
- Fig. 4: im Schnitt ein nicht zu dem Gegenstand der vorliegenden Erfindung gehöriges Dichtelement, wobei die Dichtscheibe zwischen Tragring und Gehäuse geklemmt ist;
- Fig. 5: das in Fig. 4 gezeigte, nicht zu dem Gegenstand der vorliegenden Erfindung gehörige Dichtelement vor der Montage;
- Fig. 6: ein erfindungsgemäßes Dichtelement gemäß Fig. 5 mit zusätzlichem Aufnahmeraum für die Dichtscheibe;
- Fig. 7: ein erfindungsgemäßes Dichtelement gemäß Fig. 6 mit formschlüssiger Verbindung von Innenring und Außenring;
- Fig. 8: ein erfindungsgemäßes Dichtelement mit einem an den Innenring angeformten Radialwellendichtring;
- Fig. 9: ein nicht zu dem Gegenstand der vorliegenden Erfindung gehöriges Dichtelement mit einer an den Innenring angeformten Elastomerspur.

Die Figuren zeigen ein Dichtelement 1 zur Herstellung einer elektrisch leitfähigen Verbindung zwischen einem ersten Maschinenelement 2 und einem zweiten Maschinenelement 3. Bei den vorliegenden Ausgestaltungen ist das erste Maschinenelement 2 eine rotierende Welle und das zweite Maschinenelement 3 ein Gehäuse. Das erste Maschinenelement 2 und das zweite Maschinenelement 3 können dabei Bestandteil eines elektrischen Antriebes eines Kraftfahrzeuges sein.

Das Dichtelement 1 umfasst zumindest eine Dichtscheibe 4 und einen Tragring 5. Dabei besteht zumindest die Dichtscheibe 4 aus einem elektrisch leitfähigen Werkstoff. Bei der vorliegenden Ausgestaltung ist die Dichtscheibe 4 aus einem mit PTFE getränkten Vliesstoff ausgebildet und enthält elektrisch leitfähige Partikel in Form von metallischen Fasern. Weitere vorteilhafte elektrisch leitfähige Partikel können aus Leitruß oder Metallpartikeln bestehen. Die Dichtscheibe 4 ist mittels einer Klemmverbindung an dem Tragring 5 festgelegt.

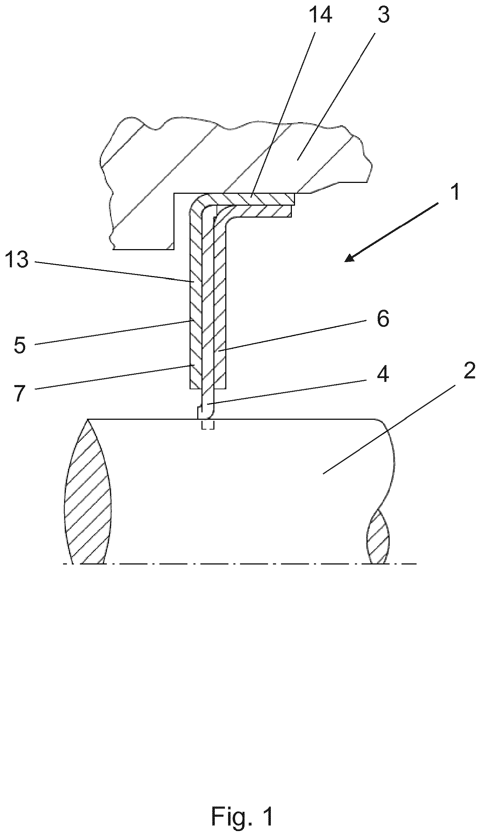

Bei der Ausgestaltung gemäß Figur 1 umfasst der Tragring 5 einen Innenring 6 und einen Außenring 7, wobei die Dichtscheibe 4 zwischen dem Innenring 6 und dem Außenring 7 festgelegt ist. Bei dieser Ausgestaltung ist zumindest der Außenring 7 aus elektrisch leitfähigem Werkstoff ausgebildet. Vorzugsweise sind der Innenring 6 und der Außenring 7 als Stanzteile ausgebildet und bestehen aus metallischem Werkstoff. Die Dichtscheibe 4 ist zwischen dem Innenring 6 und dem Außenring 7 eingeklemmt und dort ortsfest fixiert. Der Innenring 6 und der Außenring 7 weisen jeweils einen Radialflansch 13 und einen Axialflansch 14 auf, wobei der Außendurchmesser des Axialflansches 14 des Innenrings 6 im Wesentlichen dem Innendurchmesser des Axialflansches 14 des Außenrings 7 entspricht. Der Innendurchmesser und der Außendurchmesser sind so gewählt, dass sich eine Presspassung ergibt, so dass der Innenring 6, die Dichtscheibe 4 und der Außenring 7 verliersicher ineinander gefügt sind. Bei dieser Ausgestaltung liegt der Radialflansch des Außenrings 7 an der Radialschulter des zweiten Maschinenelementes 3 an.

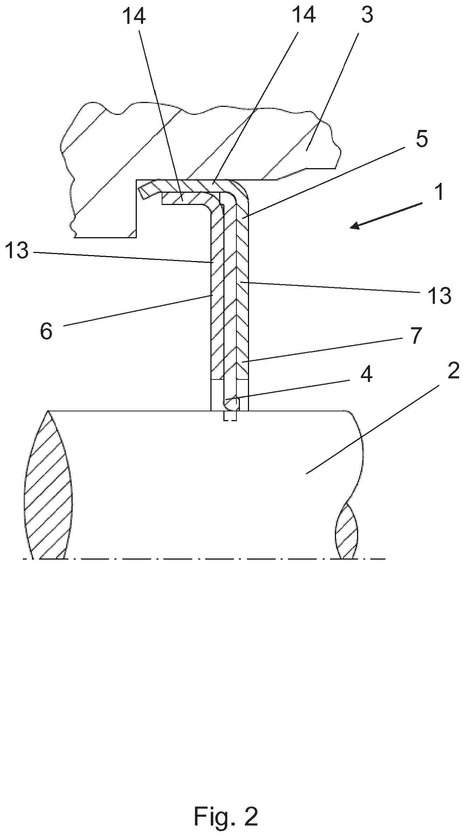

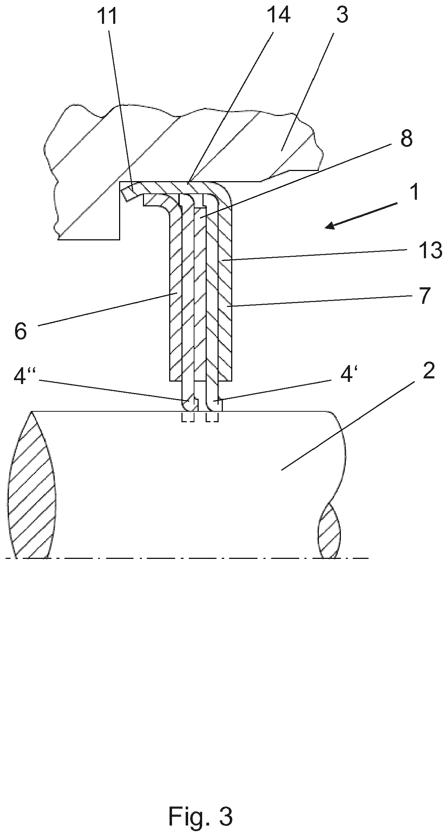

Figur 2 zeigt eine alternative Ausgestaltung des in Figur 3 gezeigten Dichtelementes 1. Bei dieser Ausgestaltung ist das freie Ende 11 des Axialflansches 14 des Außenringes 7 radial nach innen gebogen.

Dazu wird das freie Ende 11 nach der Montage der Dichtscheibe 4 und des Innenringes 6 nach innen umgebördelt. Dadurch ist der Innenring 6 formschlüssig in dem Außenring 7 verriegelt. Des Weiteren ist es durch die sich dadurch ergebende Querschnittsverjüngung im Bereich des freien Endes 11 möglich, das Dichtelement 1 so in dem zweiten Maschinenelement 3 positionieren, dass das freie Ende 11 an der Radialschulter des zweiten Maschinenelementes 3 anliegt.

Figur 3 zeigt ein Dichtelement 1, bei welchem der Tragring 5 einen Zwischenring 8 umfasst. Eine erste Dichtscheibe 4' ist zwischen dem Innenring 6 und dem Zwischenring 8 und eine zweite Dichtscheibe 4" ist zwischen dem Zwischenring 8 und dem Außenring 7 festgelegt.

Bei dieser Ausgestaltung ist zumindest der Außenring 7 aus elektrisch leitfähigem Werkstoff ausgebildet. Vorzugsweise sind der Innenring 6, der Zwischenring 8 und der Außenring 7 als Stanzteile ausgebildet und bestehen aus metallischem Werkstoff. Die beiden Dichtscheiben 4', 4" sind zwischen dem Innenring 6 und dem Zwischenring 8 und zwischen dem Zwischenring 8 und dem Außenring 7 eingeklemmt und dort ortsfest fixiert. Der Innenring 6 und der Außenring 7 weisen jeweils einen Radialflansch 13 und einen Axialflansch 14 auf, wobei der Außendurchmesser des Axialflansches 14 des Innenrings 6 im Wesentlichen dem Innendurchmesser des Axialflansches 14 des Außenrings 7 entspricht. Der Innendurchmesser und der Außendurchmesser sind so gewählt, dass sich eine Presspassung ergibt, so dass der Innenring 6, der Zwischenring 8, die Dichtscheiben 4',4" und der Außenring 7 verliersicher ineinander gefügt sind. Bei dieser Ausgestaltung liegt der Radialflansch 13 des Außenrings 7 an der Radialschulter des zweiten Maschinenelementes 3 an.

Bei dieser Ausgestaltung ist das freie Ende 11 des Axialflansches 14 des Außenringes 7 radial nach innen gebogen. Dazu wird das freie Ende 11 nach der Montage der Dichtscheibe 4 und des Innenringes 6 nach innen umgebördelt. Dadurch ist der Innenring 6 formschlüssig in dem Außenring 7 verriegelt. Des Weiteren ist es durch die sich dadurch ergebende Querschnittsverjüngung im Bereich des freien Endes 11 möglich, das Dichtelement 1 so in dem zweiten Maschinenelement 3 positionieren, dass das freie Ende 11 an der Radialschulter des zweiten Maschinenelementes 3 anliegt.

Der Innenring 6, der Zwischenring 8 und der Außenring 7 sind elektrisch leitfähig ausgebildet. Des Weiteren ist zumindest eine Dichtscheibe 4' elektrisch leitfähig ausgebildet. Dabei ist es denkbar, beide Dichtscheiben 4', 4" elektrisch leitfähig auszurüsten. Alternativ ist nur eine Dichtscheibe 4' elektrisch leitfähig ausgerüstet und die andere Dichtscheibe 4" ist aus einem weichmagnetischen Werkstoff ausgebildet. Dabei bildet die andere Dichtscheibe 4" eine Abschirmung gegenüber elektromagnetischer Störstrahlung.

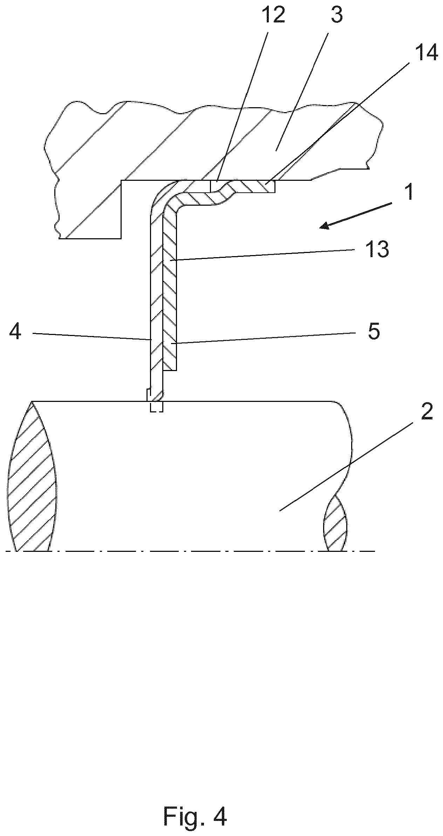

Bei der nicht zu dem Gegenstand der Erfindung gehörenden Ausgestaltung gemäß Figur 4 ist die Dichtscheibe 4 zwischen dem Tragring 5 und dem zweiten Maschinenelement 3 festgelegt. Dabei liegt die Dichtscheibe 4 stirnseitig an dem Radialflansch 13 des Tragrings 5 an und erstreckt sich abschnittsweise auch außenumfangsseitig über den Axialflansch 14 des Tragrings 5. Aus dem zweiten Maschinenelement 3, dem Gehäuse, ist eine Radialschulter ausgebildet, wobei die Dichtscheibe 4 nach Montage zwischen der Radialschulter des zweiten Maschinenelementes 3 und dem Tragring 5 eingeklemmt und dadurch ortsfest fixiert ist.

Der Tragring 5 weist einen Absatz auf, durch welchen sich ein Aufnahmeraum 12 für die Dichtscheibe 4 ergibt. Dabei ist der Absatz so ausgebildet, dass die Dichtscheibe 4 zwischen dem Tragring 5 und dem zweiten Maschinenelement 3, hier einem Gehäuse, eingeklemmt ist, wobei die Dichtscheibe 4 im Vergleich zu der Ausgangsdicke der Dichtscheibe 4 um 20% komprimiert ist. Dadurch beträgt die Dicke der Dichtscheibe 4 in dem eingeklemmten Bereich 80% der Ausgangsdicke.

Bei dieser Ausgestaltung bildet die Dichtscheibe 4 gegenüber dem ersten Maschinenelement 2 eine dynamische Dichtung und gegenüber dem zweiten Maschinenelement 3 eine statische Dichtung. Des Weiteren erstreckt sich die Dichtscheibe 4 von dem ersten Maschinenelement 2 bis zu dem zweiten Maschinenelement 3, so dass die elektrisch leitfähige Verbindung ausschließlich über die Dichtscheibe 4 erfolgen kann. Insofern ist es bei dieser Ausgestaltung nicht erforderlich, dass der Tragring 5 aus elektrisch leitfähigem Werkstoff besteht. Insofern ist es denkbar, den Tragring 5 aus Kunststoff, vorzugsweise spritzgießfähigem Kunststoff auszubilden.

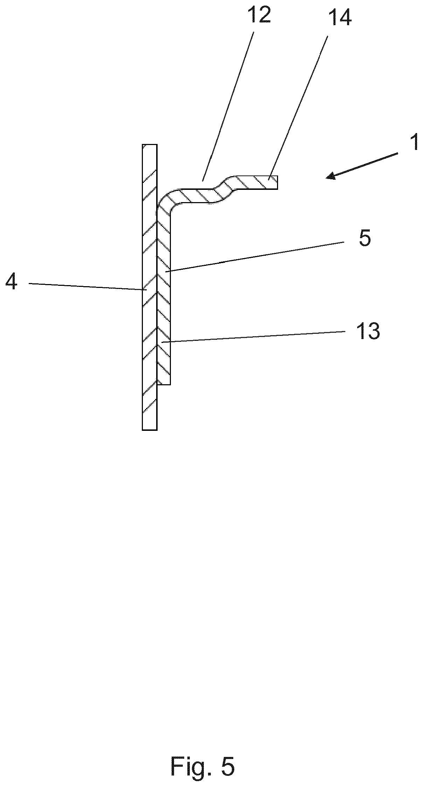

Figur 5 zeigt eine nicht zu dem Gegenstand der Erfindung gehörende Ausgestaltung des in Figur 1 gezeigten Dichtelementes 1 vor der Montage. Bei dieser Ausgestaltung ist die Dichtscheibe 4 stoffschlüssig an die Stirnseite des Radialflansches 13 des Tragringes 5 angebunden, so dass Dichtscheibe 4 und Tragring 5 verliersicher miteinander verbunden sind.

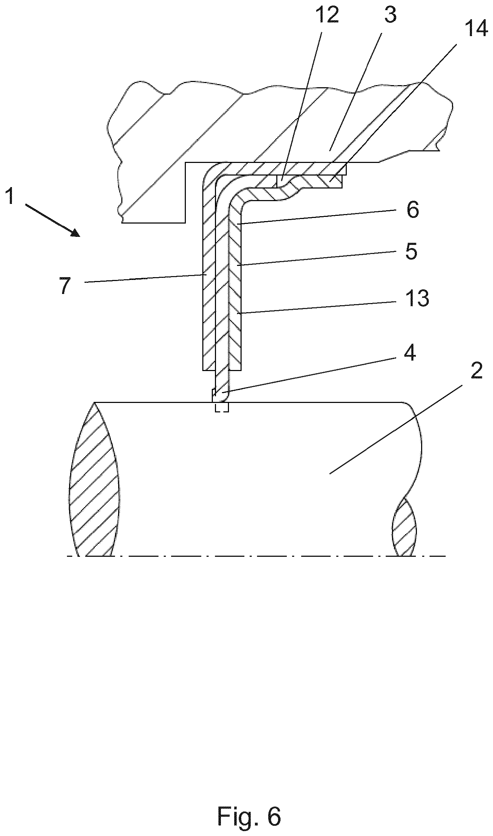

Figur 6 zeigt eine weitere alternative, erfindungsgemäße Ausgestaltung des in Figur 3 gezeigten Dichtelementes 1. Bei der Ausgestaltung gemäß Figur 6 umfasst der Tragring 5 einen Innenring 6 und einen Außenring 7, wobei die Dichtscheibe 4 zwischen dem Innenring 6 und dem Außenring 7 festgelegt ist. Bei dieser Ausgestaltung ist zumindest der Außenring 7 aus elektrisch leitfähigem Werkstoff ausgebildet. Vorzugsweise sind der Innenring 6 und der Außenring 7 als Stanzteile ausgebildet und bestehen aus metallischem Werkstoff. Die Dichtscheibe 4 ist zwischen dem Innenring 6 und dem Außenring 7 eingeklemmt und dort ortsfest fixiert. Der Innenring 6 und der Außenring 7 weisen jeweils einen Radialflansch 13 und einen Axialflansch 14 auf, wobei der Außendurchmesser des Axialflansches 14 des Innenrings 6 im Wesentlichen dem Innendurchmesser des Axialflansches 14 des Außenrings 7 entspricht. Der Innendurchmesser und der Außendurchmesser sind so gewählt, dass sich eine Presspassung ergibt, so dass der Innenring 6, die Dichtscheibe 4 und der Außenring 7 verliersicher ineinander gefügt sind. Bei dieser Ausgestaltung liegt der Radialflansch 13 des Außenrings 7 an der Radialschulter des zweiten Maschinenelementes 3 an. Bei dieser Ausgestaltung ist ferner im Bereich des Axialflansches 14 des Innenrings 6 eine Querschnittsverjüngung ausgebildet, welche sich an den Radialflansch 13 des Innenrings 6 anschließt. Dadurch bildet sich zwischen Innenring 6 und Außenring 7 ein Aufnahmeraum 12 für die Dichtscheibe 4.

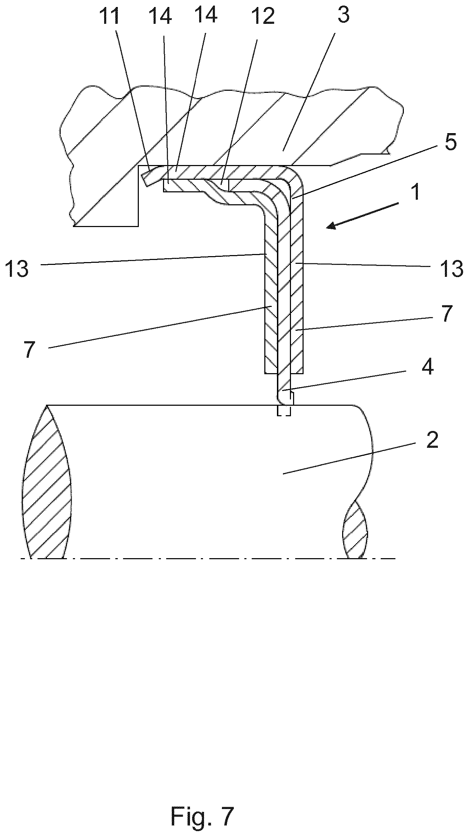

Die Ausgestaltung gemäß Figur 7 zeigt eine Weiterbildung des in Figur 6 gezeigten Dichtelementes 1. Bei dieser erfindungsgemäßen Ausgestaltung ist das freie Ende 11 des Axialflansches 14 des Außenringes 7 radial nach innen gebogen. Dazu wird das freie Ende 11 nach der Montage der Dichtscheibe 4 und des Innenringes 6 nach innen umgebördelt. Dadurch ist der Innenring 6 formschlüssig in dem Außenring 7 verriegelt. Des Weiteren ist es durch die sich dadurch ergebende Querschnittsverjüngung im Bereich des freien Endes 11 möglich, das Dichtelement 1 so in dem zweiten Maschinenelement 3 so positionieren, dass das freie Ende 11 an der Radialschulter des zweiten Maschinenelementes 3 anliegt. Des Weiteren ist im Bereich des Axialflansches 14 des Innenrings 6 eine Querschnittsverjüngung ausgebildet, welche sich an den Radialflansch 13 des Innenrings 6 anschließt. Dadurch bildet sich zwischen Innenring 6 und Außenring 7 ein Aufnahmeraum 12 für die Dichtscheibe 4.

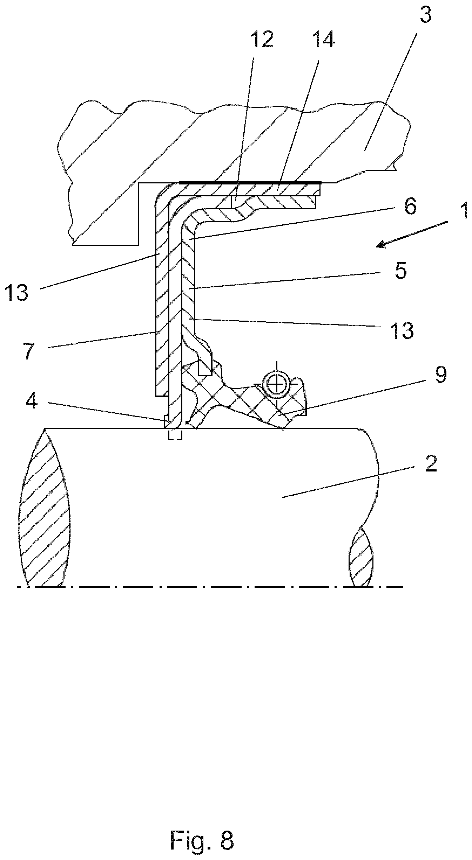

Figur 8 zeigt eine Weiterbildung des in Figur 6 gezeigten Dichtelementes 1. Bei dieser erfindungsgemäßen Ausgestaltung ist an dem dem ersten Maschinenelement 2 zugeordneten Ende des Radialflansches 13 des Innenrings 6 ein Radialwellendichtring 9 angeordnet. Der Radialwellendichtring 9 besteht aus elastomerem Werkstoff und ist direkt an den Innenring 6 angeformt. Der Radialwellendichtring 9 weist eine Dichtlippe auf, welche mittels einer Ringwendelfeder mit radialer Vorspannung an das erste Maschinenelement 2 angepresst wird.

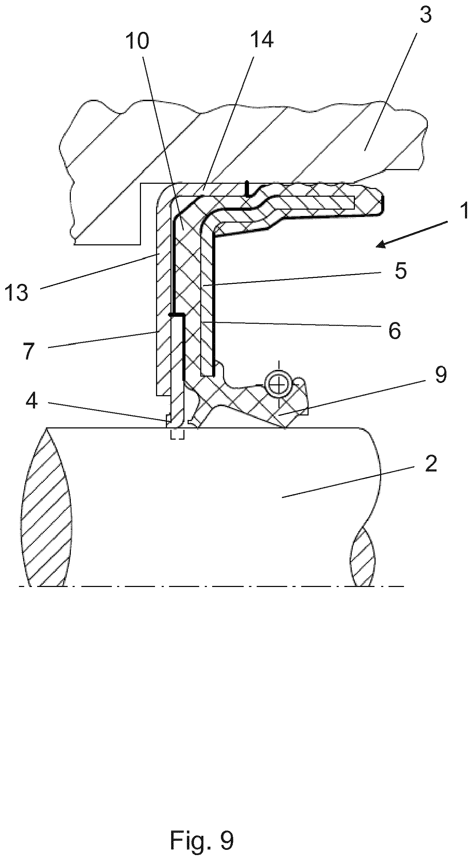

Figur 9 zeigt eine alternative, nicht zu dem Gegenstand der Erfindung gehörende Weiterbildung des in Figur 6 gezeigten Dichtelementes 1. Bei dieser Ausgestaltung ist an dem Innenring 8 eine Elastomerspur 10 angeordnet. Die Elastomerspur 10 erstreckt sich entlang der dem Außenring 7 zugewandten Stirnseite des Innenrings 6 und erstreckt sich von dem Radialflansch 13 bis über den Axialflansch 14. Im Bereich des Axialflansches 14 gelangt die Elastomerspur 10 in Kontakt mit dem zweiten Maschinenelement 3 und bildet eine statische Dichtung. Auf der dem Außenring 7 zugewandten Stirnseite bildet die Elastomerspur 10 eine Aufnahme für die Dichtscheibe 4. Aus der Elastomerspur 10 ist ein Radialwellendichtring 9 ausgeformt. Der Radialwellendichtring 9 besteht aus elastomerem Werkstoff und ist direkt an den Innenring 6 angeformt. Der Radialwellendichtring 9 weist eine Dichtlippe auf, welche mittels einer Ringwendelfeder mit radialer Vorspannung an das erste Maschinenelement 2 angepresst wird.

## Patentansprüche

1. Dichtelement (1) zur Herstellung einer elektrisch leitfähigen Verbindung zwischen einem ersten Maschinenelement (2) und einem zweiten Maschinenelement (3), umfassend zumindest eine Dichtscheibe (4) und einen Tragring (5), wobei der Tragring (5) einen Axialflansch (14) und einen Radialflansch (13) aufweist, der Tragring (5) einen Innenring (6) und einen Außenring (7) umfasst, wobei die Dichtscheibe (4) zwischen dem Innenring (6) und dem Außenring (7) festgelegt ist, wobei die Dichtscheibe (4) zumindest abschnittsweise entlang des Axialflansches (14) mittels einer Klemmverbindung zwischen dem Innenring (6) und dem Außenring (7) festgelegt ist, **dadurch gekennzeichnet, dass** die Dichtscheibe (4) aus einem elektrisch leitfähigen Vliesstoff ausgebildet ist.

2. Dichtelement nach Anspruch 1, **dadurch gekennzeichnet, dass** die Dichtscheibe (4) in dem Abschnitt, in welchem die Dichtscheibe (4) zwischen dem Innenring (6) und dem Außenring (7) festgelegt ist, zwischen 1 0% bis 30% der Ausgangsdicke komprimiert ist.

3. Dichtelement nach Anspruch 1 oder 2, **dadurch gekennzeichnet, dass** der Tragring (5) zumindest einen Zwischenring (8) umfasst, wobei eine erste Dichtscheibe (4') zwischen dem Innenring (6) und dem Zwischenring (8) und zumindest eine zweite Dichtscheibe (4") zwischen dem Zwischenring (8) und dem Außenring (7) festgelegt ist.

4. Dichtelement nach Anspruch 3, **dadurch gekennzeichnet, dass** der Außenring (7) elektrisch leitfähig ausgebildet ist.

5. Dichtelement nach Anspruch 3, **dadurch gekennzeichnet, dass** die erste Dichtscheibe (4') und die zweite Dichtscheibe (4") aus voneinander abweichenden Werkstoffen bestehen.

6. Dichtelement nach einem der Ansprüche 1 bis 5, **dadurch gekennzeichnet, dass** der Innenring (6) und/oder der Zwischenring (8) elektrisch leitfähig ausgebildet sind.

7. Dichtelement nach einem der Ansprüche 1 bis 6, **dadurch gekennzeichnet, dass** an dem Innenring (6) ein Radialwellendichtring (9) angeordnet ist.

8. Dichtelement nach einem der Ansprüche 1 bis 7, **dadurch gekennzeichnet, dass** an dem Innenring (6) eine Elastomerspur (10) angeordnet ist.

9. Dichtelement nach einem der Ansprüche 1 bis 8, **dadurch gekennzeichnet, dass** die Dichtscheibe (4) elektrisch leitfähige Partikel aufweist.

10. Dichtelement nach einem der Ansprüche 1 bis 9, **dadurch gekennzeichnet, dass** die aus Vliesstoff gebildete Dichtscheibe (4) mit einer PTFE-Dispersion versehen ist.

## Claims

1. Sealing element (1) for establishing an electrically conductive connection between a first machine element (2) and a second machine element (3), comprising at least one sealing disc (4) and a supporting ring (5), wherein the supporting ring (5) comprises an axial flange (14) and a radial flange (13), the supporting ring (5) comprises an inner ring (6) and an outer ring (7), wherein the sealing disc (4) is fixed between the inner ring (6) and the outer ring (7), wherein the sealing disc (4) is fixed at least in sections along the axial flange (14) by means of a clamping connection between the inner ring (6) and the outer ring (7), **characterised in that** the sealing disc (4) is formed from an electrically conductive non-woven material.

2. Sealing element according to claim 1, **characterised in that** the sealing disc (4) is compressed between 10% and 30% of the initial thickness in the section in which the sealing disc (4) is fixed between the inner ring (6) and the outer ring (7).

3. Sealing element according to claim 1 or 2, **characterised in that** the supporting ring (5) comprises at least one intermediate ring (8), wherein a first sealing disc (4') is fixed between the inner ring (6) and the intermediate ring (8), and at least one second sealing disc (4") is fixed between the intermediate ring (8) and the outer ring (7).

4. Sealing element according to claim 3, **characterised in that** the outer ring (7) is designed to be electrically conductive.

5. Sealing element according to claim 3, **characterised in that** the first sealing disc (4') and the second sealing disc (4") are made of materials that differ from one another.

6. Sealing element according to one of claims 1 to 5, **characterised in that** the inner ring (6) and/or the intermediate ring (8) are electrically conductive.

7. Sealing element according to one of claims 1 to 6, **characterised in that** a radial shaft sealing ring (9) is arranged on the inner ring (6).

8. Sealing element according to one of claims 1 to 7, **characterised in that** an elastomer track (10) is arranged on the inner ring (6).

9. Sealing element according to one of claims 1 to 8, **characterised in that** the sealing disc (4) comprises electrically conductive particles.

10. Sealing element according to one of claims 1 to 9, **characterised in that** the sealing disc (4) that is formed from the non-woven material is provided with a PTFE dispersion.

## Revendications

1. Élément d'étanchéité (1) pour réaliser une liaison électriquement conductrice entre un premier élément de machine (2) et un deuxième élément de machine (3), comprenant au moins une rondelle d'étanchéité (4) et une bague de support (5), dans laquelle la bague de support (5) a une bride axiale (14) et une bride radiale (13), la bague de support (5) comprend une bague intérieure (6) et une bague extérieure (7), dans laquelle la rondelle d'étanchéité (4) est fixée entre la bague intérieure (6) et la bague extérieure (7), dans laquelle la rondelle d'étanchéité (4) est fixée au moins sur certaines parties le long de la bride axiale (14) au moyen d'une liaison par serrage entre la bague intérieure (6) et la bague extérieure (7), **caractérisé en ce que** la rondelle d'étanchéité (4) est réalisée d'un non-tissé électriquement conducteur.

2. Élément d'étanchéité selon la revendication 1, **caractérisé en ce que** la rondelle d'étanchéité (4) est comprimée entre 10 % et 30 % de son épaisseur initiale dans la partie où la rondelle d'étanchéité (4) est fixée entre la bague intérieure (6) et la bague extérieure (7).

3. Élément d'étanchéité selon la revendication 1 ou 2, **caractérisé en ce que** la bague de support (5) comprend au moins une bague intermédiaire (8), dans laquelle une première rondelle d'étanchéité (4') est fixée entre la bague intérieure (6) et la bague intermédiaire (8) et au moins une deuxième rondelle d'étanchéité (4") est fixée entre la bague intermédiaire (8) et la bague extérieure (7).

4. Élément d'étanchéité selon la revendication 3, **caractérisé en ce que** la bague extérieure (7) est conçue électriquement conductrice.

5. Élément d'étanchéité selon la revendication 3, **caractérisé en ce que** la première rondelle d'étanchéité (4') et la deuxième rondelle d'étanchéité (4") sont constituées de matériaux différents l'un de l'autre.

6. Élément d'étanchéité selon l'une des revendications 1 à 5, **caractérisé en ce que** la bague intérieure (6) et/ou la bague intermédiaire (8) sont conçues électriquement conductrices.

7. Élément d'étanchéité selon l'une des revendications 1 à 6, **caractérisé en ce qu'**un joint d'arbre radial (9) est disposé sur la bague intérieure (6).

8. Élément d'étanchéité selon l'une des revendications 1 à 7, **caractérisé en ce qu'**une piste en élastomère (10) est disposée sur la bague intérieure (6).

9. Élément d'étanchéité selon l'une des revendications 1 à 8, **caractérisé en ce que** la rondelle d'étanchéité (4) présente des particules électriquement conductrices.

10. Élément d'étanchéité selon l'une des revendications 1 à 9, **caractérisé en ce que** la rondelle d'étanchéité (4) formée d'un non-tissé est pourvue d'une dispersion de PTFE.
